# EUROPÄISCHE PATENTSCHRIFT

(11) **EP 1 192 695 B1**
(45) Veröffentlichungstag und Bekanntmachung des Hinweises auf die Patenterteilung: **02.06.2010**
(21) Anmeldenummer: 00956062.4
(22) Anmeldetag: 06.07.2000
(51) Int. Cl.: H02H 7/16

(54) **FILTERSCHALTUNGSANORDNUNG ZUR VERMEIDUNG DER ÜBERLASTUNG VON KONDENSATOREN MIT HOCHFREQUENTEN SPANNUNGEN**
FILTERING DEVICE FOR PREVENTING THE OVERLOAD OF CAPACITORS BY HIGH-FREQUENCY VOLTAGES
FILTRE DE PROTECTION POUR EMPECHER LA SURCHARGE DE CONDENSATEURS AVEC DES TENSIONS HAUTE FREQUENCE

(30) Priorität: 06.07.1999 DE 19931055
(43) Veröffentlichungstag der Anmeldung: 03.04.2002
(73) Patentinhaber: EPCOS AG, 81669 München (DE)
(72) Erfinder: KARASEK, Manfred, D-89555 Steinheim (DE); PAULWITZ, Christian, D-93186 Pettendorf (DE)
(74) Vertreter: Epping - Hermann - Fischer
(86) Internationale Anmeldenummer: PCT/DE2000/002203
(87) Internationale Veröffentlichungsnummer: WO 2001/003267

(56) Entgegenhaltungen:
- EP-A1- 0 642 199
- EP-A1- 0 682 402
- DE-C1- 4 441 279
- PATENT ABSTRACTS OF JAPAN vol. 1996, no. 04, 30. April 1996 (1996-04-30) & JP 07 326548 A (OKAMURA KENKYU:KK;OTHERS: 01), 12. Dezember 1995 (1995-12-12)

## Beschreibung

Die vorliegende Erfindung betrifft eine Filterschaltungsanordnung zur Vermeidung der Überlastung mindestens eines Kondensators mit hochfrequenten Spannungen, die aufgrund eines Fehlers gegenüber einem Normalbetrieb auftreten.

Beim Einsatz von getakteten Stromversorgungen, insbesondere bei Frequenzumrichtern, wie einem PWM-Umrichter, in erdfreien bzw. IT-Netzen usw. wird ein Kurzschluß eines Leiters gegen Erde gewöhnlich toleriert. Entsteht dieser Kurzschluß aber beispielsweise am Ausgang eines Frequenzumrichters, stehen aufgrund der am Ausgang anliegenden Rechteckspannung hohe pulsförmige Spannungen an den Kondensatoren zwischen einem Netzeingang oder Zwischenkreis und Erde an. Die dort üblicherweise eingesetzten Kondensatoren sind für solche hohen Spannungen aber nicht ausgelegt, so daß es zu einer thermischen Zerstörung dieser Kondensatoren kommen kann.

Um eine solche Zerstörung von Kondensatoren, insbesondere durch einen Erdschluß am Ausgang von Frequenzumrichtern, zu verhindern, werden bisher zu den gegen Erde geschalteten Kondensatoren Festwiderstände in Reihe vorgesehen oder die Kondensatoren für einen Fehlerfall überdimensioniert. Beide Lösungen zum Schutz der Kondensatoren sind mit Nachteilen verbunden:

Die in Reihe geschalteten Festwiderstände bedingen hohe Verlustleistungen im normalen Betrieb und verursachen beträchtliche Kosten. Eine Überdimensionierung der Kondensatoren erfordert einen großen Platzbedarf und ebenfalls hohe Kosten.

EP 0 682 402 zeigt eine Filterschaltungsanordnung gemäß Oberbegriff des Anspruchs 1.

EP 0 642 199 zeigt eine Schutzanordnung, bei weilcher mindestens ein Kondensator mit einem Kurzschlußbegrenzer verbunden ist, welcher eienn Kaltleiter aufweist.

Es ist daher Aufgabe der vorliegenden Erfindung, eine Filterschaltungsanordnung zur Vermeidung der Überlastung von Kondensatoren durch hochfrequente Spannungen zu schaffen, welche die Kondensatoren zuverlässig und ohne großen Aufwand bei geringem Platzbedarf zu schützen vermag.

Diese Aufgabe wird bei einer Filterschaltungsanordnung der eingangs genannten Art durch die Merkmale von Anspruch 1 gelöst.

Bei der erfindungsgemäßen Schutzvorrichtung wird also ein gemeinsamer Kaltleiter in Reihe zu den zu schützenden Kondensatoren geschaltet. Fließt über diesen Kaltleiter ein Strom, so kommt es zu einer Erwärmung des Kaltleiters und damit zu einer Zunahme des Widerstandes infolge des positiven Temperaturkoeffizienten (PTC). Somit fällt die fehlerhafte Spannung, die sonst an einem Kondensator ansteht, am nun wesentlich höherimpedanten Kaltleiter ab. Bei einer weiteren Erwärmung des Kaltleiters erhöht sich der Widerstand noch mehr und "trennt" somit den in Reihe zum Kaltleiter liegenden Kondensator elektrisch ab.

Von besonderer Bedeutung ist, daß dieser Vorgang reversibel ist: wird der Fehler beseitigt und liegt die hohe Fehlerspannung nicht mehr an, so ist damit auch kein hoher Stromfluß mehr möglich, und der Kaltleiter kann sich abkühlen. Dies hat eine Abnahme der Impedanz zur Folge. Der Normalbetrieb einer Anlage ist ohne zusätzliche Maßnahmen jederzeit wieder möglich, und die Schutzvorrichtung ist im Falle eines erneut auftretenden Fehler wieder wirksam.

Die erfindungsgemäße Filterschaltungsanordnung kann besonders vorteilhaft bei Frequenzumrichtern, Funkentstörfiltern, Zwischenkreisen oder in Stromversorgungsanlagen angewandt werden.

Die erfindungsgemäße Filterschaltungsanordnung wird in mehrphasigen Versorgungsnetzen eingesetzt.

Im Unterschied zu den oben beschriebenen bestehenden Lösungen mit überdimensionierten Kondensatoren oder Festwiderständen hoher Leistung zeichnet sich die erfindungsgemäße Filterschaltungsanordnung mit einem in Reihe zu den zu schützenden Kondensatoren liegenden Kaltleiter durch eine nicht unerhebliche Kosteneinsparung und Reduzierung des benötigten Platzes aus. Dabei ist insbesondere auch zu beachten, daß bei der erfindungsgemäßen Filterschaltungsanordnung keine große Leistung über das Gehäuse eines Leistungskondensators oder Hochleistungs-Festwiderstandes abgeführt werden muß und auch kein Kühlkörper eingesetzt zu werden braucht.

Wesentlich an der erfindungsgemäßen Filterschaltungsanordnung ist also der in Reihe zu den zu schützenden Kondensatoren liegende Kaltleiter, der in vorteilhafter Weise ohne großen Platzbedarf und einfach einen zuverlässigen Schutz eines der Kondensatoren vor hohen hochfrequenten Spannungen bietet und eine thermische Zerstörung des Kondensators verhindert. Damit ist es erstmals möglich, beispielsweise Entstörfilter und Schaltungen für den Betrieb in erdfreien Netzen zur Reduzierung von Störungen in Geräten einfach, platzsparend und kostengünstig aufzubauen, ohne die Eigenschaften der zu schützenden Bauelemente oder deren Funktion bei Nennbetrieb zu beeinträchtigen, wobei im Fehlerfall dennoch eine Zerstörung dieser Bauelemente zuverlässig verhindert wird.

Nachfolgend wird die Erfindung anhand der Zeichnungen näher erläutert. Es zeigen:
- Fig. 1: ein Schaltbild eines ersten Ausführungsbeispiels,
- Fig. 2: ein Schaltbild eines zweiten Ausführungsbeispiels, und
- Fig. 3: ein Schaltbild eines anderen Ausführungsbeispiels.

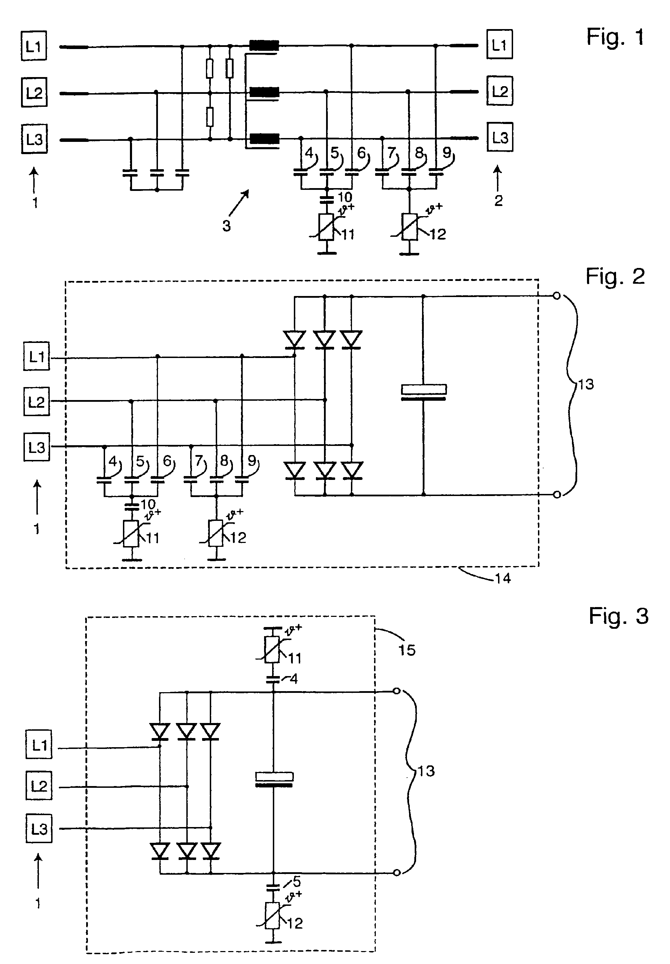

Fig. 1 zeigt Leitungen L1, L2 und L3 zwischen einer Netzseite 1 und einer Lastseite 2 eines Funkentstörfilters 3, das Kondensatoren 4 bis 10 zwischen den einzelnen Leitungen L1 bis L3 und Erde aufweist. Erfindungsgemäß sind zusätzlich Kaltleiter (PTC) 11, 12 vorgesehen, die jeweils in Reihe zu den Kondensatoren 4, 10 bzw. 5, 10 bzw. 6, 10 und zu den Kondensatoren 7, 8 und 9 liegen. Fließt über einen dieser Kaltleiter 11, 12 ein Fehlerstrom genügender Größe, kommt es zu einer Erwärmung des Kaltleiters und damit zu einer Zunahme seines Widerstandes. Damit können am Kondensator gefährlich hohe Spannungen deutlich reduziert werden. Bei einer weiteren Erwärmung des Kaltleiters erhöht sich nämlich sein Widerstandswert weiter und "trennt" damit praktisch den zugehörigen Kondensator elektrisch ab. Liegt die Fehlerspannung nicht mehr an, kühlt sich der Kaltleiter ab und nimmt wieder seine ursprüngliche Impedanz an, so daß die normale Funktion des Funkentstörfilters 3 wiederhergestellt wird.

Wie in dem Ausführungsbeispiel von Fig. 1 gezeigt ist, ist ein Kaltleiter 11 bzw. 12 mehreren Kondensatoren 4, 5 und 6 bzw. 7, 8 und 9 nachgeschaltet, wobei dieser Kaltleiter 11 auch einer Reihenschaltung von Kondensatoren 4, 10 bzw. 5, 10 bzw. 6, 10 folgen kann.

Fig. 2 zeigt ein weiteres Ausführungsbeispiel der erfindungsgemäßen Filterschaltungsanordnung, die hier in eine Stromversorgung 14 integriert ist, wobei für einander entsprechende Bauteile die gleichen Bezugszeichen wie in Fig. 1 verwendet werden. Auch hier sind die Kaltleiter 11, 12 in Reihe zu den Kondensatoren 4 bis 10 vorgesehen, wobei der Kondensator 10 den Kondensatoren 4, 5 und 6 nachgeschaltet ist. Der Kaltleiter 11 liegt in Reihe zu den Kondensatoren 4, 10 bzw. 5, 10 bzw. 6, 10, und der Kaltleiter 12 ist in Reihe zu den Kondensatoren 7 bzw. 8 bzw. 9 vorgesehen. Ein Ausgang 13 der Stromversorgung 14 ist zu einem Verbraucher geführt.

Fig. 3 zeigt ein anderes Ausführungsbeispiel mit einem Zwischenkreis 15, bei dem die Kaltleiter 11, 12 in Reihe zu den Kondensatoren 4 bzw. 5 liegen.

In dem Ausführungsbeispiel der Fig. 3 können, ähnlich wie in den Ausführungsbeispielen der Fig. 1 und 2, die Kaltleiter 11 bzw. 12 auch in Reihe zu mehreren, parallel zueinander geschalteten Kondensatoren vorgesehen sein. Ebenso ist es möglich, die Kondensatoren 4, 5 in Reihe zu weiteren Kondensatoren und zu dem Kaltleiter 11 bzw. 12 vorzusehen.

## Patentansprüche

1. Filterschaltungsanordnung mit einer ersten, zweiten und dritten Leitung (L1, L2, L3), wobei jede Leitung (L1, L2, L3) über einen Kondensator (4, 5, 6; 7, 8, 9) mit Erdpotential verbunden ist, wobei die Kondensatoren (4, 5, 6; 7, 8, 9), an denen während des Betriebs der Schaltungsanordnung hochfrequente, zur Beschädigung der Kondensatoren (4, 5, 6; 7, 8, 9) geeignete Spannungen anliegen können, gegen Überlast geschützt sind, und wobei die Kondensatoren (4, 5, 6; 7, 8, 9) an einem gemeinsamen Knoten verbunden sind, **dadurch gekennzeichnet, dass** der Knoten über einen gemeinsamen Kaltleiter (11; 12) mit dem Erdpotential verbunden ist.

2. Filterschaltungsanordnung nach Anspruch 1, bei der ein weiterer Kondensator (10) den Kondensatoren (4, 5, 6) nachgeschaltet ist.

## Claims

1. Filter circuit arrangement comprising a first, second and third line (L1, L2, L3), wherein each line (L1, L2, L3) is connected to earth potential via a capacitor (4, 5, 6; 7, 8, 9), wherein the capacitors (4, 5, 6; 7, 8, 9), at which high-frequency voltages capable of damaging the capacitors (4, 5, 6; 7, 8, 9) can be present during the operation of the circuit arrangement, are protected against overload, and wherein the capacitors (4, 5, 6; 7, 8, 9) are connected to a common node, **characterized in that** the node is connected to the earth potential via a common PTC thermistor (11; 12).

2. Filter circuit arrangement according to Claim 1, wherein a further capacitor (10) is connected downstream of the capacitors (4, 5, 6).

## Revendications

1. Montage formant filtre, comprenant une première, deuxième et troisième lignes (L1, L2, L3), chaque ligne (L1, L2, L3) étant reliée au potentiel de terre par un condensateur (4, 5, 6 ; 7, 8, 9), les condensateurs (4, 5, 6 ; 7, 8, 9), auxquels peuvent s'appliquer pendant le fonctionnement du montage des tensions de haute fréquence propres à endommager les condensateurs (4, 5, 6 ; 7, 8, 9), étant protégés vis-à-vis d'une surcharge et les condensateurs (4, 5, 6 ; 7, 8, 9) étant reliés à un noeud commun, **caractérisé en ce que** le noeud est relié au potentiel de terre par une thermistance (11 ; 12) commune à coefficient de température positif.

2. Montage formant filtre suivant la revendication 1, dans lequel un autre condensateur (10) est monté en aval des condensateurs (4, 5, 6).
